# DEMANDE DE BREVET EUROPEEN

(11) **EP 2 073 504 A1**
(43) Date de publication de la demande: **24.06.2009**
(21) Numéro de dépôt: 07301732.9
(22) Date de dépôt: 21.12.2007
(51) Int. Cl.: H04L 29/08, G06F 17/30

(54) **Dispositif et procédé d'insertion automatique, dans des données, d'une information cachée ainsi que d'un mécanisme permettant sa diffusion**

(71) Demandeur: GEMPLUS, 13420 Gémenos (FR)
(72) Inventeur: RUBON, Jean-François, 13420, GEMENOS (FR)

(57) **Abrégé**

L'invention concerne un procédé permettant, dans un flux de données (4), d'insérer au moins une information cachée (9), ainsi qu'au moins un mécanisme (13) permettant la diffusion de cette information. Ce mécanisme étant mis en évidence.
Les adjonctions se font selon l'invention sans altérer les données originales (4), ni dans leur contenu intrinsèque, ni dans leur intégrité.
L'invention concerne également un dispositif comprenant des moyens aptes pour mettre en oeuvre ledit procédé.

## Description

L'invention concerne un dispositif et un procédé d'insertion automatique d'une information cachée dans des données, ainsi qu'un mécanisme permettant sa diffusion.

L'invention porte en particulier sur un procédé permettant, dans un flux de données, d'insérer au moins une information cachée, ainsi qu'au moins un mécanisme permettant la diffusion de cette information.

Dans le présent document, le terme « donnée » désignera un ensemble de contenus demandés et attendus par l'utilisateur. De manière connexe, le terme « information » sera utilisé pour désigner un ou plusieurs renseignements ajoutés, selon l'invention, à des données. Une information « cachée » désignera une information qui n'est disponible que sur demande de la part de l'utilisateur, suite à une action volontaire de sa part. L'information sera diffusée en plus des données demandées par l'utilisateur.

L'expression « sans altérer » signifie que les données auxquelles l'expression s'applique ne sont pas modifiées, ni dans leur contenu intrinsèque, ni dans leur intégrité.

De la même manière, une distinction forte sera faite entre :
- Une "mise en évidence", qui désignera une mise en oeuvre d'un ensemble de moyens, permettant d'informer l'usager, destinataire d'un ensemble de données, que des informations cachées sont disponibles, et quel est le mode opératoire pour y accéder.
- L'action de « diffuser », qui consiste à faire en sorte que soit mis en relation directe l'information, ou la donnée à diffuser et l'utilisateur. Par exemple, l'affichage d'une fenêtre automatique (pop-up), au premier plan de l'écran, est une diffusion du contenu de ladite fenêtre.

La présente invention s'applique notamment dans la situation suivante :
- Un utilisateur demande l'accès à une donnée ;
- Un tiers veut lui fournir une information supplémentaire.

Dans la majorité des cas, cette information supplémentaire est reliée, de près ou de loin, avec un contenu publicitaire.

A ce jour, il existe principalement deux solutions qui permettent à un tiers de faire une telle adjonction d'information.

Une première solution consiste à modifier le contenu d'un ensemble de données en ajoutant de l'information. C'est par exemple, un procédé qui est couramment utilisé en lien avec des pages HTML ( HyperText Markup Language) consultables via Internet. Dans ce cas, on ajoute directement sur le site hébergeur desdites pages, des bandeaux publicitaires.

Cette solution présente des inconvénients majeurs. Un premier réside dans le fait que les données demandées par l'utilisateur sont dénaturées. De plus, les informations ajoutées doivent être connues du serveur contenant les données attendues.

Une autre solution consiste à modifier un ensemble de données au moment de leur affichage. Certains navigateurs Internet (dit navigateurs Web) peuvent adjoindre une information à une page HTML, au moment de l'afficher.

Dans cette solution, comme dans la précédente, les données attendues par l'utilisateur sont dénaturées. De plus, cette solution s'appuie sur un système logiciel, chargé de l'affichage, généralement contrôlé par l'utilisateur. Cela ne permet pas de garantir à un tiers le contrôle de cette étape.

La présente invention propose de remédier à ces inconvénients. Il est prévu une méthode et un procédé permettant à un tiers d'avoir tout ou partie du contrôle du mécanisme d'adjonction d'information, sans dénaturer les données attendues par l'utilisateur. L'invention favorise un large choix d'informations différentes pouvant être ajoutées.

Plus précisément, l'invention est un procédé d'enrichissement de données, mis en oeuvre dans un premier dispositif électronique communicant, ce premier dispositif fournissant des données à un second dispositif électronique communicant, ce procédé comportant:
- une étape d'adjonction consistant en l'insertion, parmi ces données, sans les altérer, d'au moins une information cachée,
- une étape de mécanisation consistant en l'insertion, parmi ces données, sans les altérer, d'au moins un mécanisme permettant d'accéder à l'information cachée,
- une étape de mise en évidence consistant en la mise en évidence d'au moins un mécanisme permettant d'accéder à l'information cachée.

Dans un mode de réalisation de l'invention, le procédé peut comprendre, en outre, une étape de diffusion par laquelle des moyens logiciels embarqués dans le second dispositif électronique communicant, diffusent les données à un utilisateur de ce second dispositif.

Dans des modes particuliers de réalisation, l'information peut être un contenu publicitaire, un lien vers un contenu local au premier dispositif électronique communicant, ou un lien vers un contenu externe au premier dispositif électronique communicant.

Dans un mode de réalisation de l'invention, le mécanisme exploite une fonctionnalité fournie par le second dispositif électronique communicant. Cette fonctionnalité peut par exemple, être une ouverture d'une zone d'affichage contenant l'information, ou bien l'émission sonore de l'information.

Dans un mode de réalisation de l'invention, la mise en évidence peut se faire en modifiant des propriétés d'affichage de tout ou partie des données.

Selon un mode de réalisation de l'invention, dans une étape préalable, les moyens logiciels permettant la réception des données par le second dispositif électronique communicant sont configurés afin de ne recevoir de données que du deuxième dispositif électronique communicant.

L'invention est également un premier dispositif électronique communicant relié à un deuxième dispositif électronique communicant, le premier dispositif électronique comportant des moyens pour :
- recevoir des demandes de données issues du deuxième dispositif communicant ;
- obtenir ces données ;
- insérer, parmi ces données, sans les altérer, au moins une information cachée ;
- insérer, parmi ces données, sans les altérer, au moins un mécanisme permettant d'accéder à ladite information cachée ;
- mettre en évidence au moins un mécanisme permettant d'accéder à l'information cachée ;
- transmettre les données, ainsi enrichies, vers le deuxième dispositif.

Dans des modes distincts de réalisation, le dispositif électronique peut, par exemple, être inclus dans ledit deuxième dispositif électronique, ou bien il peut être relié physiquement au deuxième dispositif électronique. Dans un autre mode de réalisation le dispositif électronique peut communiquer avec le deuxième dispositif électronique, par exemple au travers d'un liaison par radiofréquence.

Dans des modes distincts de réalisation, l'information peut par exemple être stockée dans une mémoire dudit dispositif électronique, ou bien dans une mémoire distante.

Dans un mode de réalisation, ledit deuxième dispositif selon l'invention comporte des moyens pour télécharger l'information.

Dans un mode de réalisation, ledit premier dispositif électronique est une carte à puce.

L'invention permet avantageusement que le dispositif en charge d'adjoindre l'information aux données soit dans le voisinage direct de l'utilisateur. Cela permet à ce dispositif, dans un mode particulier de réalisation, de collecter des informations liées à l'utilisateur et aux données qu'il demande. Ce dispositif peut alors adapter très finement l'information à insérer à l'utilisateur et/ou aux données.

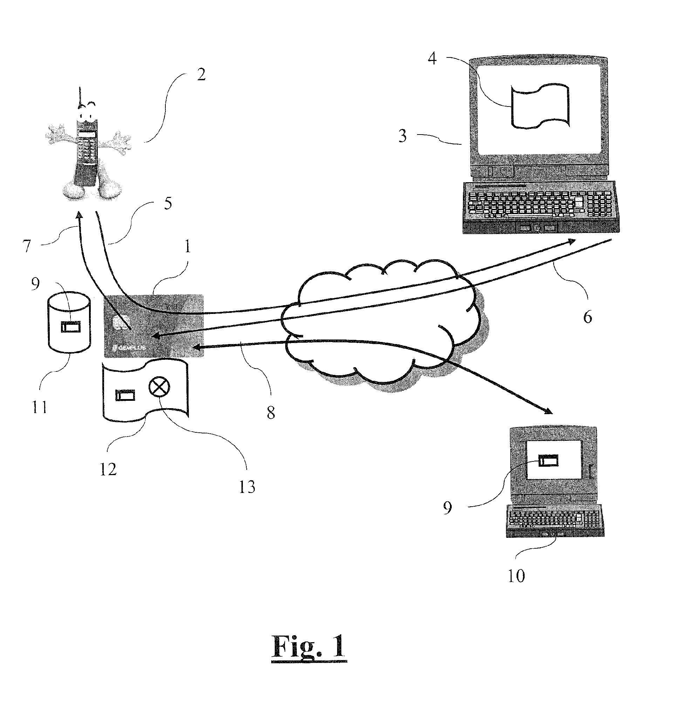

D'autres caractéristiques et avantages de l'invention ressortiront clairement de la description qui en est faite ci-après, à titre indicatif et nullement limitatif, en référence à la figure 1 annexée :
- La figure 1 décrit un système pour enrichir de données selon l'invention.

Dans la figure 1, le premier dispositif électronique est une carte à puce 1, et le deuxième dispositif électronique communicant est un téléphone portable 2. La carte 1 est un élément fonctionnellement indépendant du téléphone 2. Cela permet que cet élément appartienne à un tiers. Généralement, dans la majorité des utilisations de téléphones mobiles où la carte SIM (Subscriber Identity **M**odule pour module d'identification du souscripteur) est propriété de l'opérateur téléphonique. Le téléphone appartient à l'utilisateur. Ainsi, l'invention permet à l'opérateur, de contrôler l'insertion d'informations cachées bien qu'il ne contrôle pas le téléphone.

L'utilisateur, au travers de moyens logiciels embarqués dans le téléphone portable 2 demande à avoir accès à des données 4, contenues dans un ordinateur distant 3. Nous sommes, par exemple, dans le cas où les moyens logiciels sont un « navigateur web », et l'utilisateur demande à consulter une page HTML identifiée.

La demande de l'utilisateur se traduit sous la forme d'une requête 5, transmise à la carte 1.

Le fait que cette requête soit dirigée vers la carte peut venir du système en lui-même, être un choix de l'utilisateur, ou encore être lié à une configuration particulière du téléphone.

En liaison avec la figure 1, la carte 1 reçoit 6 les données 4 de l'ordinateur distant 3. Toutefois comme décrit précédemment, la carte 1 peut obtenir ces données 4 de n'importe quelle source, ou dans un cas particulièrement avantageux en disposer dans une mémoire locale 11.

Par la mise en oeuvre du procédé selon l'invention, la carte 1 peut enrichir les données 4 avec des informations cachées 9. Ces informations 9 peuvent être présentes dans un mémoire 11, interne à la carte, ou bien distante au sein d'un ordinateur distant 10. Ces deux cas sont emblématiques des situations où, le contenu publicitaire à insérer dans les données, est stocké dans la carte, ou ledit contenu est téléchargé 8 depuis un serveur dédié.

Une situation intermédiaire peut apparaître dans le cas où l'information 9 est une référence à un contenu distant. Dans l'univers d'Internet cette référence est une adresse Internet, plus généralement appelée URL (***Uniform Resource Locator*** en anglais). Un contenu distant n'est pas rapatrié, mais uniquement indexé.

Une fois que la carte a caché l'information 9 dans les données 3, sans les altérer, elle doit maintenant y ajouter au moins un mécanisme 13, et mettre celui-ci en évidence, toujours sans altérer les données.

Dans notre exemple en lien avec Internet, le mécanisme 13 permettant d'accéder à l'information cachée 13 peut être, par exemple une fenêtre contenant l'information. Cette fenêtre apparaît si l'utilisateur « clique » sur un mot particulier de la page HTML 4. La mise en évidence peut se faire en surlignant le mot en question afin d'indiquer, à l'utilisateur, qu'une information est accessible au travers de ce mot particulier.

Les données ainsi enrichies 12 sont transmises 7 au téléphone 2 dans lequel des moyens logiciels les diffusent à l'utilisateur.

## Revendications

1. Procédé d'enrichissement de données, mis en oeuvre dans un premier dispositif électronique communicant, ledit premier dispositif fournissant des données à un second dispositif électronique communicant, **caractérisé en ce que,** ledit procédé comporte:
- une étape d'adjonction consistant en l'insertion, parmi lesdites données, sans les altérer, d'au moins une information cachée,
- une étape de mécanisation consistant en l'insertion, parmi lesdites données, sans les altérer, d'au moins un mécanisme permettant d'accéder à ladite information cachée,
- une étape de mise en évidence consistant en la mise en évidence d'au moins un mécanisme permettant d'accéder à ladite information cachée.

2. Procédé selon la revendication 1 **caractérisé en ce qu'**il comprend en outre une étape de diffusion par laquelle des moyens logiciels embarqués dans ledit second dispositif électronique communicant diffusent les données à un utilisateur dudit second dispositif.

3. Procédé selon l'une des revendications 1 ou 2, **caractérisé en ce que** ladite information est un contenu publicitaire.

4. Procédé l'une des revendications 1 ou 2, **caractérisé en ce que** ladite information est un lien vers un contenu local audit premier dispositif électronique communicant.

5. Procédé selon l'une des revendications 1 ou 2, **caractérisé en ce que** ladite information est un lien vers un contenu externe audit premier dispositif électronique communicant.

6. Procédé selon l'une des revendications 1 à 5, **caractérisé en ce que** ledit mécanisme exploite une fonctionnalité fournie par le second dispositif électronique communicant.

7. Procédé selon la revendication 6, **caractérisé en ce que** ledit mécanisme est une ouverture d'une zone d'affichage contenant ladite information.

8. Procédé selon la revendication 6, **caractérisé en ce que** ledit mécanisme est une émission sonore de ladite information.

9. Procédé selon l'une des revendications 1 à 8, **caractérisé en ce que** ladite mise en évidence se fait en modifiant des propriétés d'affichage de tout ou partie desdites données.

10. Procédé selon l'une des revendications 1 à 9, **caractérisé en ce que,** dans une étape préalable, les moyens logiciels permettant la réception desdites données par ledit second dispositif électronique communicant ont été configurés afin de ne recevoir des données que dudit premier dispositif électronique communicant.

11. Dispositif électronique communicant relié à un second dispositif électronique communicant **caractérisé en ce que** ledit premier dispositif électronique comporte des moyens pour :
- recevoir des demandes de données issues dudit deuxième dispositif communicant ;
- obtenir lesdites données ;
- insérer, parmi lesdites données, sans les altérer, au moins une information cachée ;
- insérer, parmi lesdites données, sans les altérer, au moins un mécanisme permettant d'accéder à ladite information cachée ;
- mettre en évidence au moins un mécanisme permettant d'accéder à ladite information cachée ;
- transmettre les données, ainsi enrichies, vers ledit deuxième dispositif.

12. Dispositif électronique selon la revendication 11, **caractérisé en ce qu'**il est inclus dans ledit deuxième dispositif électronique.

13. Dispositif électronique selon la revendication 11, **caractérisé en ce qu'**il est relié physiquement audit deuxième dispositif électronique.

14. Dispositif électronique selon la revendication 11, **caractérisé en ce qu'**il communique avec ledit deuxième dispositif électronique au travers d'une liaison de type radiofréquence.

15. Dispositif électronique selon l'une des revendications 11 à 14, **caractérisé en ce que** ladite information est stockée dans une mémoire dudit dispositif électronique.

16. Dispositif électronique selon l'une des revendications 11 à 14, **caractérisé en ce que** ladite information est stockée dans une mémoire distante.

17. Dispositif électronique selon la revendication 16 **caractérisé en ce qu'**il comporte des moyens pour télécharger ladite information.

18. Dispositif électronique selon l'une des revendications 11 à 17 **caractérisé en ce que** ledit premier dispositif électronique est une carte à puce.
